# EUROPÄISCHE PATENTSCHRIFT

(11) **EP 2 419 662 B1**
(45) Veröffentlichungstag und Bekanntmachung des Hinweises auf die Patenterteilung: **01.05.2013**
(21) Anmeldenummer: 10707029.4
(22) Anmeldetag: 05.03.2010
(51) Int. Cl.: F16H 61/02

(54) **GETRIEBESTEUERUNGSEINRICHTUNG**
GEARBOX CONTROL DEVICE
DISPOSITIF DE COMMANDE D'UNE TRANSMISSION

(30) Priorität: 15.04.2009 DE 102009002387
(43) Veröffentlichungstag der Anmeldung: 22.02.2012
(73) Patentinhaber: ZF Friedrichshafen AG, 88038 Friedrichshafen (DE)
(72) Erfinder: STAUDINGER, Joachim, 88214 Ravensburg (DE); SAUTER, Ingo, 88074 Meckenbeuren (DE); WUERTHNER, Maik, 88677 Markdorf (DE); KEMLER, Johannes, 88212 Ravensburg (DE)
(86) Internationale Anmeldenummer: PCT/EP2010/052809
(87) Internationale Veröffentlichungsnummer: WO 2010/118917

(56) Entgegenhaltungen:
- DE-A1- 19 600 734
- DE-A1-102005 005 379
- DE-A1-102005 049 710
- DE-A1-102006 001 818
- DE-A1-102007 025 502

## Beschreibung

Die Erfindung betrifft eine Getriebesteuerungseinrichtung gemäß dem Obergriff des Anspruchs 1 bzw. 6.

Die Hauptkomponenten eines Antriebsstrangs eines Kraftfahrzeugs sind ein Antriebsaggregat und ein Getriebe. Das Getriebe wandelt Drehzahlen und Drehmomente des Antriebsaggregats und stellt so das Zugkraftangebot des Antriebsaggregats an einem Abtrieb des Antriebsstrangs bereit. Der Betrieb des Antriebsaggregats wird von einer Motorsteuerungseinrichtung gesteuert und/oder geregelt. Der Betrieb des Getriebes wird von einer Getriebesteuerungseinrichtung gesteuert und/oder geregelt. In einer Getriebesteuerungseinrichtung, die der Steuerung und/oder Regelung des Betriebs eines vorzugsweise als automatisches bzw. automatisiertes Schaltgetriebe ausgebildeten Getriebes eines Kraftfahrzeugs dient, ist eine Schaltstrategie implementiert, wobei die Schaltstrategie der Getriebesteuerungseinrichtung auf Grundlage von Fahrzustandsdaten sowie auf Grundlage von Fahrerwunschdaten den Betrieb des Getriebes steuert und/oder regelt. Insbesondere bestimmt die Schaltstrategie auf Grundlage der Fahrzustandsdaten und der Fahrerwunschdaten einen Gangwechsel von einem Istgang in einen Sollgang.

Aus der gattungsbildenden DE 10 2006 001 818 A1 ist eine Getriebesteuerungseinrichtung bekannt, die eine dem Kraftfahrzeug vorausliegende Topographie einer Fahrroute rechnergestützt auswertet, um z. B. einen Gangwechsel zu bestimmen.

Die DE 10 2007 025 502 A1 offenbart eine Getriebesteuerungseinrichtung, die das Getriebe in Abhängigkeit von Informationen über das Umfeld des Kraftfahrzeugs, insbesondere in Abhängigkeit von Informationen über Streckensteigungen und/oder Streckenverläufe, steuert. Dabei wertet die Getriebesteuerungseinrichtung auch solche Informationen über das Umfeld des Kraftfahrzeugs aus, die von Verkehrsleiteinrichtungen gesendet werden.

Obwohl es aus dem Stand der Technik bereits grundsätzlich bekannt ist, dass eine Getriebesteuerungseinrichtung den Betrieb des Getriebes auf Grundlage von Daten über das Umfeld des Kraftfahrzeugs, insbesondere auf Grundlage von Topographiedaten, steuert und/oder regelt, besteht ein weiterer Bedarf daran, den Betrieb eines Getriebes auf Grundlage solcher Daten weiter zu verbessern, insbesondere unter Gewährleistung eines möglichst geringen Kraftstoffverbrauchs bei gleichzeitig möglichst großer Agilität des Kraftfahrzeugs. Es besteht daher Bedarf an einer Getriebesteuerungseinrichtung, welche die aus dem Stand der Technik bekannten Getriebesteuerungseinrichtungen dahingehend weiterentwickelt, dass bei möglichst geringem Kraftstoffverbrauch eine möglichst große Agilität des Kraftfahrzeugs gewährleistet wird.

Hiervon ausgehend liegt der vorliegenden Erfindung die Aufgabe zu Grunde, eine neuartige Getriebesteuerungseinrichtung zu schaffen.

Diese Aufgabe wird nach einem ersten Aspekt der Erfindung durch eine Getriebesteuerungseinrichtung gemäß Anspruch 1 gelöst.

Nach einem zweiten Aspekt der Erfindung wird diese Aufgabe durch eine Getriebesteuerungseinrichtung gemäß Anspruch 6 gelöst.

Beide Aspekte der hier vorliegenden Erfindung stellen Getriebesteuerungseinrichtungen bereit, die bei möglichst geringem Kraftstoffverbrauch eine möglichst große Agilität eines Kraftfahrzeugs gewährleisten.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

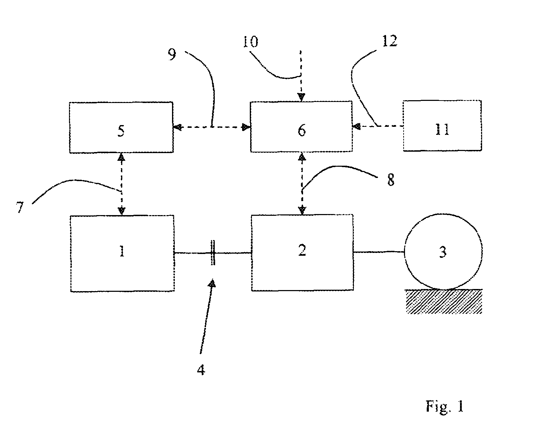

- Fig. 1: ein Blockschaltbild zur Verdeutlichung der Erfindung.

Fig. 1 zeigt eine stark schematisierte Darstellung eines Antriebsstrangs eines Kraftfahrzeugs, wobei der Antriebsstrang der Fig. 1 ein Antriebsaggregat 1 und ein Getriebe 2 umfasst, wobei das Getriebe 2 zwischen das Antriebsaggregat 1 und einen Abtrieb 3 des Antriebsstrangs gestaltet ist. Das Getriebe 2 ist vorzugsweise als automatisches bzw. automatisiertes Schaltgetriebe ausgebildet und wandelt Drehzahlen und Drehmomente des Antriebsaggregats 1 und stellt so das Zugkraftangebot des Antriebsaggregats 1 am Abtrieb 3 bereit. Gemäß Fig. 1 ist zwischen das Antriebsaggregat 1 und das Getriebe 2 eine Anfahrkupplung 4 geschaltet.

Dem Antriebsaggregat 1 ist eine Motorsteuerungseinrichtung 5 und dem Getriebe 2 ist eine Getriebesteuerungseinrichtung 6 zugeordnet. Der Betrieb des Antriebsaggregats 1 wird mit Hilfe der Motorsteuerungseinrichtung 5 gesteuert und/oder geregelt, wozu das Antriebsaggregat 1 mit der Motorsteuerungseinrichtung 5 Daten 7 austauscht. Der Betrieb des Getriebes 2 wird von der Getriebesteuerungseinrichtung 6 gesteuert und/oder geregelt, wozu die Getriebesteuerungseinrichtung 6 mit dem Getriebe 2 Daten 8 austauscht. Gemäß Fig. 1 tauschen ferner die Motorsteuerungseinrichtung 5 und die Getriebesteuerungseinrichtung 6 untereinander Daten 9 aus.

Gemäß Fig. 1 werden der Getriebesteuerungseinrichtung 6 nicht nur vom Getriebe 2 Daten 8 und von der Motorsteuerungseinrichtung 5 Daten 9 bereitgestellt, vielmehr werden der Getriebesteuerungseinrichtung 6 z. B. von weiteren, nicht gezeigten Sensoren Daten 10 bereitgestellt, auf Grundlage derer die Getriebesteuerungseinrichtung 6 den Betrieb des Getriebes 2 steuert und/oder regelt.

Ferner werden der Getriebesteuerungseinrichtung 6 von einer Navigationseinrichtung 11 Daten 12 über die Umgebung bzw. Topographie des Kraftfahrzeugs bereitgestellt, und zwar sowohl Daten über die Topographie bzw. Umgebung einer aktuellen Position des Kraftfahrzeugs als auch Daten über eine in einem definierten Abstand vor der aktuellen Position des Kraftfahrzeugs liegende Topographie bzw. Umgebung des Kraftfahrzeugs desselben.

Die Getriebesteuerungseinrichtung 6 steuert und/oder regelt auf Grundlage von Fahrzustandsdaten und Fahrerwunschdaten den Betrieb des Getriebes 2. Insbesondere ist in der Getriebesteuerungseinrichtung 6 eine Schaltstrategie implementiert, die auf Grundlage von Fahrzustandsdaten und Fahrerwunschdaten einen Gangwechsel von einem aktuellen Istgang in einen Sollgang bestimmt.

Als Fahrzustandsdaten verwendet die Getriebesteuerungseinrichtung 6 hierzu eine Fahrzeugmasse und/oder einen Fahrwiderstand und/oder eine Fahrzeugneigung und/oder eine Fahrzeuggeschwindigkeit und/oder eine Fahrzeugbeschleunigung und/oder eine Motordrehzahl und/oder ein Motormoment. Als Fahrerwunschdaten werden der Getriebesteuerungseinrichtung 6 insbesondere Daten über die Betätigung eines Fahrpedals und Daten über die Betätigung eines Bremspedals des Kraftfahrzeugs bereitgestellt.

Motordrehzahl und/oder Motormoment werden der Getriebesteuerungseinrichtung 6 dabei vorzugsweise als Daten 9 von der Motorsteuerungseinrichtung 5 bereitgestellt. Die Fahrzustandsdaten Fahrzeugneigung und Fahrzeuggeschwindigkeit sowie Fahrzeugbeschleunigung werden der Getriebesteuerungseinrichtung 6 vorzugsweise als Daten 10 von externen Sensoren bereitgestellt, wobei die Fahrzeugbeschleunigung alternativ auch innerhalb der Getriebesteuerungseinrichtung 6 errechnet werden kann.

Die erfindungsgemäße Getriebesteuerungseinrichtung 6 berechnet nach einem ersten Aspekt der Erfindung auf Basis von Topographiedaten 12 einer aktuellen Position des Kraftfahrzeugs die Fahrzustandsdaten Fahrzeugmasse und/oder Fahrwiderstand und/oder Fahrzeugneigung fortlaufend aktuell, um auf Basis solcher fortlaufend aktuell ermittelter Fahrzustandsdaten in der Schaltstrategie einen Gangwechsel genauer unter Bereitstellung einer möglichst großen Agilität des Kraftfahrzeugs bei möglichst geringem Kraftstoffverbrauch zu gewährleisten.

Nach einer vorteilhaften Weiterbildung der Erfindung kalibriert die Getriebesteuerungseinrichtung 6 bei Einschalten einer Zündung des Kraftfahrzeugs oder im Stillstand des Kraftfahrzeugs bei eingeschalteter Zündung auf Basis von Topographiedaten 12 der aktuellen Position des Kraftfahrzeugs einen getriebeinternen oder getriebeexternen Neigungssensor.

Hierzu errechnet die Getriebesteuerungseinrichtung 6 aus den Topographiedaten 12 der aktuellen Position des Kraftfahrzeugs die aktuelle Fahrzeugneigung und korrigiert hiermit einen entsprechenden Messwert des Neigungssensors.

Vorzugsweise erfolgt diese Kalibrierung bei jedem Einschalten der Zündung des Kraftfahrzeugs, wobei dann, wenn bei Einschalten der Zündung des Kraftfahrzeugs keine Topographiedaten der aktuellen Position des Kraftfahrzeugs zur Verfügung stehen, die Kalibrierung auf den nächsten Fahrzeugstillstand, z. B. an der nächsten roten Ampel, verschoben wird.

Nach einer vorteilhaften Weiterbildung der Erfindung berechnet die Getriebesteuerungseinrichtung 6 während der Fahrt des Kraftfahrzeugs fortlaufend den aktuellen Fahrwiderstand des Kraftfahrzeugs aus den Topographiedaten der aktuellen Position des Kraftfahrzeugs, aus einem Luftwiderstandsanteil, aus einem Rollwiderstand und einer Fahrzeugmasse. In diesem Zusammenhang kann vorgesehen sein, dass die Getriebesteuerungseinrichtung 6 aus den Topographiedaten der aktuellen Position des Kraftfahrzeugs, aus einer aktuellen Zugkraft des Antriebsaggregats 1 und einer aktuellen Fahrzeugbeschleunigung und einem aktuellen Luftwiderstandsanteil den aktuellen Rollwiderstand und auch den Rollwiderstandsbeiwert berechnet. Die aktuelle Zugkraft des Antriebsaggregats 1 kann dabei aus dem aktuellen Motormoment abgeleitet werden. Die aktuelle Fahrzeugbeschleunigung kann entweder messtechnisch oder rechnerisch aus der aktuellen Fahrzeuggeschwindigkeit bestimmt werden. Der Rollwiderstand und der Rollwiderstandsbeiwert werden in einem Speicher für eine spätere Verwendung abgespeichert.

Dann, wenn ein fester Rollwiderstand angenommen wird, kann der aktuelle Fahrwiderstand auch unabhängig vom Motormoment berechnet werden. In dem Fall, in dem der aktuelle Fahrwiderstand ohne Berücksichtigung des Motormoments berechnet wird, kann das Motormoment abhängig von der Motordrehzahl für bestimmte Fahrsituationen, in welchen das Motormoment benötigt wird, kennfeldabhängig korrigiert werden. Die Korrekturwerte werden in einem Speicher abgelegt.

Nach einer weiteren vorteilhaften Weiterbildung der Erfindung berechnet die Getriebesteuerungseinrichtung 6 während einer Fahrt des Kraftfahrzeugs aus den Topographiedaten 12 der aktuellen Position des Kraftfahrzeugs, aus einem Luftwiderstand, aus einem Rollwiderstand und aus einer aktuellen Fahrzeugbeschleunigung und/oder einer aktuellen Zugkraft fortlaufend die aktuelle Fahrzeugmasse. Dabei kann wiederum die Fahrzeugbeschleunigung messtechnisch oder rechnerisch aus der aktuellen Fahrzeuggeschwindigkeit bestimmt werden. Der Rollwiderstand des Kraftfahrzeugs kann entweder als feste Größe vorgegeben oder variabel aus der aktuellen Zugkraft berechnet werden. Vorzugsweise erfolgt die Berechnung der aktuellen Fahrzeugmasse während jeder Anfahrt des Kraftfahrzeugs aus dem Stillstand desselben heraus.

In diesem Zusammenhang kann vorgesehen sein, dass die Getriebesteuerungseinrichtung 6 nur in bestimmten, von Topographiedaten 12 der aktuellen Position des Kraftfahrzeugs abhängigen Betriebszuständen die Fahrzeugmasse neu berechnet. Erkennt z. B. die Getriebesteuerungseinrichtung 6, dass ein Kraftfahrzeug in einer Steigung bzw. einem Gefälle abgestellt wurde, so kann darauf geschlossen werden, dass sich die Fahrzeugmasse nicht geändert hat, wobei dann bei einer Anfahrt in der Steigung bzw. im Gefälle die Getriebesteuerungseinrichtung 6 keine neue aktuelle Fahrzeugmasse errechnet. Weiterhin kann vorgesehen sein, dass dann, wenn die Getriebesteuerungseinrichtung 6 auf Grundlage der Topographiedaten 12 der aktuellen Position des Kraftfahrzeugs erkennt, dass das Kraftfahrzeug z. B. an einem Rastplatz abgestellt wurde, bei der nächsten Anfahrt die Fahrzeugmasse auch nicht neu berechnet wird, da in diesem Fall auch darauf geschlossen werden kann, dass sich die Fahrzeugmasse nicht verändert hat. Erkennt hingegen die Getriebesteuerungseinrichtung 6 auf Grundlage der Topographiedaten 12 des Navigationssystems 11, dass das Kraftfahrzeug seinen Zielort erreicht hat, so wird darauf geschlossen, dass sich am Zielort die Masse des Kraftfahrzeugs verändert, so dass bei der nächsten Anfahrt die Fahrzeugmasse neu berechnet wird.

Wie oben beschrieben, berechnet demnach die erfindungsgemäße Getriebesteuerungseinrichtung 6 auf Grundlage von Topographiedaten 12 der aktuellen Position des Kraftfahrzeugs, also abhängig von der aktuellen Position und der aktuellen Steigung bzw. dem aktuellen Gefälle des Kraftfahrzeugs, die Fahrzustandsdaten Fahrzeugmasse und Fahrwiderstand und Fahrzeugneigung fortlaufend aktuell, um auf Grundlage dieser aktuell berechneten Fahrzustandsdaten den Betrieb des Getriebes 2 genauer zu steuern und/oder zu regeln, nämlich unter Gewährleistung eines geringen Kraftstoffverbrauchs bei möglichst großer Agilität. Insbesondere ermittelt die Schaltstrategie der Getriebesteuerungseinrichtung 6 auf Grundlage dieser fortlaufend aktuell berechneten Fahrzustandsdaten Gangwechsel von einem Istgang in einen Zielgang unter Gewährleistung eines geringen Kraftstoffverbrauchs bei großer Agilität.

Nach einem zweiten Aspekt der Erfindung, der in Kombination mit den oben beschriebenen Details zum Einsatz kommen kann, werden von der Getriebesteuerungseinrichtung 6 nicht nur Topographiedaten 12 der aktuellen Position des Kraftfahrzeugs zur Steuerung und/oder Regelung des Betriebs des Getriebes 2 verwendet, sondern vielmehr auch Topographiedaten 12, die in einem definierten Abstand vor der aktuellen Position des Kraftfahrzeugs liegen. Auf Grundlage der Topographiedaten 12, die in einem definierten Abstand vor dem Kraftfahrzeug liegen, bestimmt die Schaltstrategie der Getriebesteuerungseinrichtung 6 einen Gangwechsel von einem aktuellen Istgang in einen Sollgang, und zwar wiederum auch abhängig von den Fahrzustandsdaten und von Fahrerwunschdaten, wobei nach dem zweiten Aspekt der Erfindung der definierte Abstand vor dem Kraftfahrzeug, dessen Topographiedaten die Getriebesteuerungseinrichtung 6 in der Schaltstrategie verwendet, von der Fahrgeschwindigkeit abhängig ist. So ist der definierte Abstand des Kraftfahrzeugs, dessen Topographiedaten in der Getriebesteuerungseinrichtung 6, nämlich in der Schaltstrategie derselben, verwendet werden, derart von der Fahrzeuggeschwindigkeit abhängig, dass der definierte Abstand vor dem Kraftfahrzeug um so größer bemessen ist, je größer die Fahrzeuggeschwindigkeit ist.

Nach einer vorteilhaften Weiterbildung dieses Aspekts der hier vorliegenden Erfindung passt die Getriebesteuerungseinrichtung 6 abhängig von einer Steigung, welche die Getriebesteuerungseinrichtung 6 auf Grundlage der in dem definierten Abstand vor dem Kraftfahrzeug liegenden Topographiedaten ermittelt, Zählerinkrementwerte eines Schaltungsbeobachters der Getriebesteuerungseinrichtung an. Ein Schaltungsbeobachter ist grundsätzlich aus der DE 10 2005 005 379 A1 bekannt, wobei im Sinne der Erfindung vorgeschlagen wird, die Zählerinkrementwerte eines solchen Schaltungsbeobachters abhängig von den in einem definierten Abstand vor dem Kraftfahrzeug liegenden Topographiedaten anzupassen.

In diesem Zusammenhang kann vorgesehen sein, dass die Getriebesteuerungseinrichtung 6 Zählerwertinkremente des Schaltungsbeobachters derart anpasst, dass derselbe dann, wenn die ermittelte Steigung des Kraftfahrzeugs in dem definierten Abstand vor dem Kraftfahrzeug flacher wird, Zug-Rückschaltungen sperrt. Ferner kann die Getriebesteuerungseinrichtung Zählerwertinkremente des Schaltungsbeobachters derart anpassen, dass derselbe dann, wenn die ermittelte Steigung in den definierten Abstand vor dem Kraftfahrzeug steiler wird, Zug-Hochschaltungen sperrt.

Ferner kann vorgesehen sein, dass die Getriebesteuerungseinrichtung 6 abhängig von Topographiedaten des definierten Abstands vor dem Kraftfahrzeug einen fahrwiderstandsabhängigen Drehzahloffset berechnet, den dann die Schaltstrategie benutzt, um eine Zieldrehzahl von Hochschaltungen im Zugbetrieb anzupassen. So ist es z. B. möglich, die Zieldrehzahl von Hochschaltungen vor einer Steigung anzuheben, um so Hochschaltungen nicht mehr auszuführen, und zwar im Gegensatz zu einer Situation, in welcher vor dem Kraftfahrzeug ein Gefälle liegt. Hier werden dann Zieldrehzahlen für Hochschaltungen im Zugbetrieb abgesenkt, so dass eine Hochschaltung früher ausgeführt wird.

Liest die Getriebesteuerungseinrichtung 6 aus den Topographiedaten des definierten Abstands vor dem Kraftfahrzeug ein, dass das Kraftfahrzeug im Stadtverkehr betrieben wird, so kann die Getriebesteuerungseinrichtung 6 einen Fahrerwunsch, der in der Regel von einer Fahrpedalbetätigung abhängig ist, in der Getriebesteuerungseinrichtung 6 reduzieren oder erhöhen. Bei einer Reduzierung des Fahrerwunsches reduziert die Getriebesteuerungseinrichtung 6 gleichzeitig eine Zieldrehzahl und einen Gangsprung für eine Hochschaltung im Zugbetrieb, wobei über einen von der Getriebesteuerungseinrichtung ausge-lösten Motoreingriff das maximale Moment des Antriebsaggregats begrenzt werden kann. Hierdurch lässt sich Kraftstoff sparen, da im Stadtverkehr in Folge von Geschwindigkeitslimitierungen ein hoher Fahrerwunsch in der Regel nicht notwendig ist. Wird hingegen im Stadtverkehr von der Getriebesteuerungseinrichtung 6 ein Fahrerwunsch intern erhöht, so wird gleichzeitig eine Zieldrehzahl für eine Hochschaltung im Zugbetrieb angehoben und der schaltbare Gangsprung reduziert. Es werden dann Hochschaltungen im Zugbetrieb später ausgelöst, wobei es dem Fahrer damit möglich ist, das Kraftfahrzeug mit dem Fahrpedal zu verzögern.

Dann, wenn die Getriebesteuerungseinrichtung 6 auf Basis der in dem definierten Abstand vor dem Kraftfahrzeug liegenden Topographiedaten einen Stadtverkehr für das Kraftfahrzeug erkennt, kann über die Getriebesteuerungseinrichtung 6 auch eine Geräuschemissionsreduzierung des Kraftfahrzeugs initiiert werden. So kann in diesem Fall die Getriebesteuerungseinrichtung 6 für Schaltungen, insbesondere für Hochschaltungen im Zugbetrieb, Zieldrehzahlen absenken und Gangsprünge reduzieren, so dass mit niedrigerer Motordrehzahl und demnach geringerer Geräuschemission gefahren wird. Weiterhin kann in diesem Fall die Getriebesteuerungseinrichtung 6 eine Motorbremse deaktivieren und/oder einen Motorlüfter abschalten. In Nutzfahrzeugen können in diesem Fall weiterhin Luftpresser, die z. B. zur Bereitstellung pneumatischer Bremshilfsenergie benötigt werden, abgeschaltet werden.

In diesem Zusammenhang kann vorgesehen sein, dass die Getriebesteuerungseinrichtung 6 rechtzeitig vor einem Stadtverkehr Luftpresser einschaltet, um somit einen Lufttank ausreichend zu füllen. Die Getriebesteuerungseinrichtung 6 kann im Stadtverkehr darüber hinaus Motorführungen für die Ausführung von Schaltungen derart beeinflussen, dass ein Aufbau eines Motormoments und ein Erreichen bzw. Anfahren einer Synchrondrehzahl zum Einlegen eines Sollgangs verlangsamt werden.

Wird auf Basis der in dem definierten Abstand vor dem Kraftfahrzeug liegenden Topographiedaten eine Kreuzung mit Stoppschild oder eine rote Ampel oder eine ähnliche Umgebungssituation des Kraftfahrzeugs eingelesen, so wird von der Getriebesteuerungseinrichtung 6 vorzugsweise intern ein Fahrerwunsch erhöht und eine Zieldrehzahl für eine Hochschaltung im Zug-betrieb angehoben, so dass eine Hochschaltung im Zugbetrieb später ausgeführt wird. Liest die Getriebesteuerungseinrichtung 6 aus den vor dem Kraftfahrzeug liegenden Topographiedaten eine Geschwindigkeitsbegrenzung ein, so beeinflusst dieselbe Hochschaltungen im Zugbetrieb mit Motoreingriff derart, dass über den Motoreingriff die Maximalgeschwindigkeit nicht überschritten wird. Erkennt die Getriebesteuerungseinrichtung 6 aus den vor dem Kraftfahrzeug im definierten Abstand geltenden Topographiedaten, dass das Kraftfahrzeug in großen Höhen betrieben wird, so wird für eine Hochschaltung im Zugbetrieb eine höhere Zieldrehzahl eingestellt, um einen Leistungsverlust des Antriebsaggregats über die Verlagerung in einen Betriebspunkt mit größerem verfügbarem Moment auszugleichen.

Wie bereits ausgeführt, passt die Getriebesteuerungseinrichtung abhängig von einer Steigung, welche die Getriebesteuerungseinrichtung aus den in dem definierten Abstand vor dem Kraftfahrzeug liegenden Topographiedaten ermittelt, Zählerinkrementwerte eines Schaltungsbeobachters der Getriebesteuerungseinrichtung an, und zwar sowohl für Hochschaltungen als auch für Rückschaltungen im Zugbetrieb.

In diesem Zusammenhang sperrt der Schaltungsbeobachter über entsprechend angepasste Zählerwertinkremente dann, wenn die ermittelte Steigung in dem definierten Abstand vor dem Kraftfahrzeug flacher wird, Zug-Rückschaltungen.

Eine Schaltdrehzahl einer Schaltstrategie für Rückschaltungen im Zugbetrieb wird vorzugsweise über einen fahrwiderstandsabhängigen Drehzahloffset beeinflusst. Hierdurch kann die Schaltdrehzahl für Rückschaltungen im Zugbetrieb vor einer Steigung frühzeitig abgesenkt und gegebenenfalls eine Rückschaltung nicht mehr ausgeführt werden. Der Fahrwiderstand und somit auch der fahrwiderstandsabhängige Drehzahloffset wird dabei aus den Topographiedaten ermittelt, die in dem definierten Abstand vor dem Kraftfahrzeug liegen. Vorzugsweise bestimmt die Getriebesteuerungseinrichtung auch den auszuführenden Gangsprung für eine Zug-Rückschaltung abhängig von diesem ermittelten fahrwiderstandsabhängigen Drehzahloffset. Zieldrehzahlen für Schub- bzw. Zug-Rückschaltungen (Schaltungen, die mit Betätigung des Fahrpedals ausgelöst werden) berechnet die Getriebesteuerungseinrichtung 6 abhängig vom ermittelten fahrwiderstandsabhängigen Drehzahloffset analog zu Zug-Hochschaltungen.

Nach einer vorteilhaften Weiterbildung ermittelt die erfindungsgemäße Getriebesteuerungseinrichtung 6 eine Zugkraft, die zum Befahren einer im definierten Abstand vor dem Kraftfahrzeug liegenden Steigung benötigt wird. Die Getriebesteuerungseinrichtung 6 berechnet hierbei aus von der Motorsteuerungseinrichtung 5 bereitgestellten Motordaten eine Mindestdrehzahl, die das Antriebsaggregat zum Befahren der Steigung benötigt, ebenso wie einen entsprechenden Gangsprung und löst dann den jeweiligen Gangwechsel aus.

Zur Beeinflussung von Schub-Hochschaltungen wertet die erfindungsgemäße Getriebesteuerungseinrichtung 6 ebenfalls die Steigung aus den im definierten Abstand vor dem Kraftfahrzeug liegenden Topographiedaten aus.

Dann, wenn die Getriebesteuerungseinrichtung 6 erkennt, dass auf ein Gefällestück eine Ebene und damit ein Gefälleauslauf folgt, führt die Getriebesteuerungseinrichtung 6 eine Hochschaltung im Schubbetrieb aus, um so die Motorbremswirkung des Antriebsaggregats zu reduzieren. Vorzugsweise löst in diesem Zusammenhang die Getriebesteuerungseinrichtung 6 die Hochschaltung nur dann aus, wenn die sich an das Gefälle anschließende Ebene eine Mindestlänge aufweist. Erkennt hingegen die Getriebesteuerungseinrichtung 6, dass auf ein Gefälle eine Ebene mit Stadtverkehr folgt, so wird die oben beschriebene Schub-Hochschaltung unterdrückt.

Erkennt die Getriebesteuerungseinrichtung 6 über die Auswertung der in dem definierten Abstand vor dem Kraftfahrzeug liegenden Topographiedaten, dass dem Kraftfahrzeug ein starkes Gefälle voraus liegt bzw. sich das Kraftfahrzeug zu Beginn eines längeren Gefällestücks befindet, sperrt die erfindungsgemäße Getriebesteuerungseinrichtung 6 Schub-Hochschaltungen und es werden ausschließlich solche Schaltungen im Getriebe 2 zugelassen, um das Antriebsaggregat 1 vor Überdrehzahl zu schützen.

Wie bereits ausgeführt, wertet die erfindungsgemäße Getriebesteuerungseinrichtung 6 die Topographiedaten, die in dem definierten Abstand vor dem Kraftfahrzeug liegen, fortlaufend aus, um so z. B. den Steigungsverlauf in diesem definierten Abstand vor dem Kraftfahrzeug zu ermitteln. Erkennt die erfindungsgemäße Getriebesteuerungseinrichtung 6 hierbei, dass sich das Kraftfahrzeug aktuell in einer Ebene befindet, jedoch auf die Ebene ein Gefälle folgt, so berechnet die erfindungsgemäße Getriebesteuerungseinrichtung 6 welcher Gang im Getriebe 2 eingelegt werden muss, damit das Kraftfahrzeug im Gefälle über eine Bremswirkung des Antriebsaggregats, über ein sogenanntes (Motor-)Schleppmoment desselben, unter Berücksichtigung von im Fahrzeug verfügbarer Dauerbremsleistung, die z. B. von einem Intarder bereitgestellt werden kann, mit konstanter Fahrgeschwindigkeit zu betreiben.

Ermittelt die Getriebesteuerungseinrichtung 6, dass die Dauerbremsleistung ausreicht, um das Gefälle ohne Geschwindigkeitszunahme zu befahren, so sperrt die Getriebesteuerungseinrichtung Schub-Rückschaltungen. Im anderen Fall werden Schub-Rückschaltungen zugelassen. Gegebenenfalls kann die Getriebesteuerungseinrichtung 6 in diesem Zusammenhang zur Bereitstellung zusätzlicher Bremsleistung einen Motorlüfter aktivieren, um Rückschaltungen im Schubbetrieb zu vermeiden.

Zieldrehzahlen und Gangsprünge für Schub-Rückschaltungen berechnet die erfindungsgemäße Getriebesteuerungseinrichtung 6 wiederum abhängig von einem Fahrwiderstand bzw. einem fahrwiderstandsabhängigen Drehzahloffset, den die Getriebesteuerungseinrichtung 6 aus den in dem definierten Abstand vor dem Kraftfahrzeug liegenden Topographiedaten errechnet.

Erkennt die erfindungsgemäße Getriebesteuerungseinrichtung aus den in dem definierten Abstand vor dem Kraftfahrzeug liegenden Topographiedaten eine Kurvenfahrt, die mit der aktuellen Fahrgeschwindigkeit nicht befahrbar wäre, so löst die erfindungsgemäße Getriebesteuerungseinrichtung bei betätigen der Betriebsbremse eine Rückschaltung im Schubbetrieb aus, um so ein Drehzahlniveau für das Antriebsaggregat zu erreichen, mit dem nach Beendigung der Kurvenfahrt ein Zugbetrieb des Kraftfahrzeugs möglich ist. Hierdurch ermöglicht die erfindungsgemäße Getriebesteuerungseinrichtung ein Schalten in einem verbrauchsoptimierten Drehzahlbereich des Antriebsaggregats.

Erkennt die erfindungsgemäße Getriebesteuerungseinrichtung 6 aus den in dem definierten Abstand zu dem Kraftfahrzeug liegenden Topographiedaten einen vorausliegenden Kreisverkehr, so löst die Getriebesteuerungseinrichtung 6 mit Loslassen eines Bremspedals oder mit Deaktivieren der Dauerbremse eine Schub-Rückschaltung aus und zwar derart, dass im Zielgang des Gangwechsels eine Beschleunigungsreserve für einen Zugbetrieb bereitgestellt wird.

Hierdurch wird ein spontanes Einfahren in den Kreisverkehr ermöglicht. Mit Erreichen der Einfahrt in den Kreisverkehr bzw. eine einstellbare Distanz vor demselben löst die Getriebesteuerungseinrichtung 6 wiederum eine Schub-Rückschaltung in einen Zielgang aus, um die Beschleunigungsreserve für den Zugbetrieb bereitzustellen und so ein Einfahren in den Kreisverkehr spontan zu ermöglichen.

Dann, wenn die erfindungsgemäße Getriebesteuerungseinrichtung 6 aus den in dem definierten Abstand vor dem Kraftfahrzeug liegenden Topographiedaten eine beampelte Kreuzung erkennt, werden Schub-Rückschaltungen blockiert. Erkennt die erfindungsgemäße Getriebesteuerungseinrichtung 6 aus den in dem definierten Abstand vor dem Kraftfahrzeug liegenden Topographiedaten eine Einfädelspur einer Autobahn, werden Schub-Rückschaltungen trotz eines eventuell vorhandenen Gefälles derart automatisch ausgeführt, dass bei Betätigen eines Fahrpedals eine ausreichende Beschleunigungsreserve zur Beschleunigung des Kraftfahrzeugs vorhanden ist.

Aus den in dem definierten Abstand vor dem Kraftfahrzeug liegenden Topographiedaten kann die erfindungsgemäße Getriebesteuerungseinrichtung 6 einen fiktiven Fahrwiderstand sowie eine Steigung vor dem Kraftfahrzeug berechnen, um so zu entscheiden, ob ein Rollbetrieb oder ein Segelbetrieb für das Kraftfahrzeug sinnvoll ist. Die Getriebesteuerungseinrichtung 6 kann dann den Rollbetrieb oder Segelbetrieb automatisiert auslösen.

Dann, wenn die erfindungsgemäße Getriebesteuerungseinrichtung 6 aus den in dem definierten Abstand vor dem Kraftfahrzeug liegenden Topographiedaten erkennt, dass sich das Kraftfahrzeug nicht auf einer Straße befindet, so kann zum Anfahren des Kraftfahrzeugs die Schaltstrategie beeinflusst werden, um so z. B. in einer Offroadsituation ein sicheres Anfahren des Kraftfahrzeugs zu ermöglichen.

Eine Schaltstrategie für einen Anfahrgang kann zusätzlich von der Getriebesteuerungseinrichtung 6 abhängig von der Steigung bzw. dem Fahrwiderstand, der dem Kraftfahrzeug in dem definierten Abstand voraus liegt, beeinflusst werden.

Die Erfindung kommt vorzugsweise bei Getriebesteuerungseinrichtungen von Nutzfahrzeugen wie z. B. Lastkraftwagen zum Einsatz.

### Bezugszeichen

- 1: Antriebsaggregat
- 2: Getriebe
- 3: Abtrieb
- 4: Anfahrkupplung
- 5: Motorsteuerungseinrichtung
- 6: Getriebesteuerungseinrichtung
- 7: Daten
- 8: Daten
- 9: Daten
- 10: Daten
- 11: Navigationseinrichtung
- 12: Daten

## Patentansprüche

1. Getriebesteuerungseinrichtung zur Steuerung und/oder Regelung des Betriebs eines automatischen bzw. automatisierten Schaltgetriebes eines Kraftfahrzeugs, wobei eine Schaltstrategie der Getriebesteuerungseinrichtung auf Grundlage von Fahrzustandsdaten wie Fahrzeugmasse und/oder Fahrwiderstand und/oder Fahrzeugneigung und/oder Fahrzeuggeschwindigkeit und/oder Fahrzeugbeschleunigung und/oder Motordrehzahl und/oder Motormoment sowie auf Grundlage von Fahrerwunschdaten den Betrieb des Getriebes steuert und/oder regelt, wobei die Schaltstrategie der Getriebesteuerungseinrichtung auf Basis von Topographiedaten, die in einem definierten Abstand vor einer aktuellen Position des Kraftfahrzeugs liegen, einen Gangwechsel von einem aktuellen Istgang in einen Sollgang bestimmt, **dadurch gekennzeichnet, dass** der definierte Abstand vor dem Kraftfahrzeug abhängig von der Fahrzeuggeschwindigkeit bestimmt wird.

2. Getriebesteuerungseinrichtung nach Anspruch 1, **dadurch gekennzeichnet, dass** der definierte Abstand vor dem Kraftfahrzeug abhängig von der Fahrzeuggeschwindigkeit derart bestimmt wird, dass der definierte Abstand vor dem Kraftfahrzeug umso größer ist, je größer die Fahrzeuggeschwindigkeit ist

3. Getriebesteuerungseinrichtung nach Anspruch 1 oder 2, **dadurch gekennzeichnet, dass** die Getriebesteuerungseinrichtung abhängig von einer Steigung, welche die Getriebesteuerungseinrichtung auf Grundlage der in dem definierten Abstand vor dem Kraftfahrzeug liegenden Topographiedaten ermittelt, Zählerwertinkremente eines Schaltungsbeobachters der Getriebesteuerungseinrichtung anpasst.

4. Getriebesteuerungseinrichtung nach Anspruch 3, **dadurch gekennzeichnet, dass** die Getriebesteuerungseinrichtung Zählerwertinkremente des Schaltungsbeobachters derart anpasst, dass derselbe dann, wenn die ermittelte Steigung in dem definierten Abstand vor dem Kraftfahrzeug flacher wird, Zug-Rückschaltungen sperrt.

5. Getriebesteuerungseinrichtung nach Anspruch 3 oder 4, **dadurch gekennzeichnet, dass** die Getriebesteuerungseinrichtung Zählerwertinkremen-te des Schaltungsbeobachters derart anpasst, dass derselbe dann, wenn die ermittelte Steigung in dem definierten Abstand vor dem Kraftfahrzeug steiler wird, Zug-Hochschaltungen sperrt.

6. Getriebesteuerungseinrichtung zur Steuerung und/oder Regelung des Betriebs eines automatischen bzw. automatisierten Schaltgetriebes eines Kraftfahrzeugs, wobei eine Schaltstrategie der Getriebesteuerungseinrichtung auf Grundlage von Fahrzustandsdaten wie Fahrzeugmasse und/oder Fahrwiderstand und/oder Fahrzeugneigung und/oder Fahrzeuggeschwindigkeit und/oder Fahrzeugbeschleunigung und/oder Motordrehzahl und/oder Motormoment sowie auf Grundlage von Fahrerwunschdaten den Betrieb des Getriebes steuert und/oder regelt, wobei die Getriebesteuerungseinrichtung auf Basis von Topographiedaten einer aktuellen Position des Kraftfahrzeugs die Fahrzustandsdaten Fahrzeugmasse und/oder Fahrwiderstand und/oder Fahrzeugneigung fortlaufend aktuell berechnet, **dadurch gekennzeichnet, dass** die Getriebesteuerungseinrichtung bei Einschalten einer Zündnung und/oder im Stillstand des Kraftfahrzeugs bei eingeschalteter Zündung auf Basis der Topographiedaten der aktuellen Position des Kraftfahrzeugs einen Neigungssensor kalibriert, indem die Getriebesteuerungseinrichtung aus den Topographiedaten die aktuelle Fahrzeugneigung errechnet und hiermit den Messwert des Neigungssensor korrigiert.

7. Getriebesteuerungseinrichtung nach Anspruch 6, **dadurch gekennzeichnet, dass** die Getriebesteuerungseinrichtung während der Fahrt des Kraftfahrzeugs aus den Topographiedaten, aus einem Rollwiderstand, einem Luftwiderstand und aus der Fahrzeugmasse den aktuellen Fahrwiderstand berechnet.

8. Getriebesteuerungseinrichtung nach Anspruch 7, **dadurch gekennzeichnet, dass** die Getriebesteuerungseinrichtung hierzu aus den Topographiedaten, aus einer aktuellen Zugkraft, aus einem aktuellen Luftwiderstand und aus einer aktuellen Fahrzeugbeschleunigung den aktuellen Rollwiderstand berechnet.

9. Getriebesteuerungseinrichtung nach Anspruch 8, **dadurch gekennzeichnet, dass** die Getriebesteuerungseinrichtung die aktuellen Zugkraft aus dem aktuellen Motormoment und die aktuellen Fahrzeugbeschleunigung entweder messtechnisch oder rechnerisch aus der aktuellen Fahrzeuggeschwindigkeit bestimmt.

10. Getriebesteuerungseinrichtung nach einem der Ansprüche 6 bis 9, **dadurch gekennzeichnet, dass** die Getriebesteuerungseinrichtung während einer Fahrt des Kraftfahrzeugs aus den Topographiedaten, aus einem Luftwiderstand, aus einem Rollwiderstand, aus einer aktuellen Fahrzeugbeschleunigung und/oder einer aktuellen Zugkraft die aktuelle Fahrzeugmasse berechnet.

11. Getriebesteuerungseinrichtung nach einem der Ansprüche 6 bis 10, **dadurch gekennzeichnet, dass** die Getriebesteuerungseinrichtung während einer Anfahrt des Kraftfahrzeugs aus dem Stillstand desselben die aktuellen Fahrzeugmasse berechnet.

## Claims

1. Gearbox control device for controlling and/or regulating the operation of an automatic or automated shift transmission of a motor vehicle, wherein a shift strategy of the gearbox control device, on the basis of driving status data such as vehicle mass and/or driving resistance and/or vehicle inclination and/or vehicle speed and/or vehicle acceleration and/or engine rotational speed and/or engine torque and on the basis of driver input data, controls and/or regulates the operation of the gearbox, wherein the shift strategy of the gearbox control device determines on the basis of topographical data, which lie at a defined distance in front of a current position of the motor vehicle, a gear change from a current actual gear into a setpoint gear, **characterized in that** the defined distance in front of the motor vehicle is determined as a function of the vehicle speed.

2. Gearbox control device according to Claim 1, **characterized in that** the defined distance in front of the motor vehicle is determined as a function of the vehicle speed in such a manner that the greater the vehicle speed, the larger the defined distance in front of the motor vehicle.

3. Gearbox control device according to Claim 1 or 2, **characterized in that** the gearbox control device adjusts counter value increments of a shift monitoring device of the gearbox control device as a function of a gradient which the gearbox control device identifies on the basis of the topographical data which lie at the defined distance in front of the motor vehicle.

4. Gearbox control device according to Claim 3, **characterized in that** the gearbox control device adjusts counter value increments of the shift monitoring device in such a manner that the latter blocks tractive downshifts when the identified gradient at the defined distance in front of the motor vehicle becomes flatter.

5. Gearbox control device according to Claim 3 or 4, **characterized in that** the gearbox control device adjusts counter value increments of the shift monitoring device in such a manner that the latter blocks tractive upshifts when the identified gradient at the defined distance in front of the motor vehicle becomes steeper.

6. Gearbox control device for controlling and/or regulating the operation of an automatic or automated shift transmission of a motor vehicle, wherein a shift strategy of the gearbox control device, on the basis of driving status data such as vehicle mass and/or driving resistance and/or vehicle inclination and/or vehicle speed and/or vehicle acceleration and/or engine rotational speed and/or engine torque and on the basis of driver input data, controls and/or regulates the operation of the gearbox, wherein the gearbox control device continuously calculates, on the basis of topographical data of a current position of the motor vehicle, the current driving status data vehicle mass and/or driving resistance and/or vehicle inclination, **characterized in that** the gearbox control device calibrates an inclination sensor, during switching on of an ignition and/or when the motor vehicle is at a standstill with the ignition switched on, on the basis of the topographical data of the current position of the motor vehicle **in that** the gearbox control device calculates the current vehicle inclination from the topographical data and hereby corrects the measurement value of the inclination sensor.

7. Gearbox control device according to Claim 6, **characterized in that** the gearbox control device calculates the current driving resistance during travel of the motor vehicle from the topographical data, from a rolling resistance, an air resistance and from the vehicle mass.

8. Gearbox control device according to Claim 7, **characterized in that**, for this purpose, the gearbox control device calculates the current rolling resistance from the topographical data, from a current tractive force, from a current air resistance and from a current vehicle acceleration.

9. Gearbox control device according to Claim 8, **characterized in that** the gearbox control device determines the current tractive force from the current engine torque and the current vehicle acceleration either metrologically or by calculation from the current vehicle speed.

10. Gearbox control device according to one of Claims 6 to 9, **characterized in that** the gearbox control device calculates the current vehicle mass during travel of the motor vehicle from the topographical data, from an air resistance, from a rolling resistance, from a current vehicle acceleration and/or a current tractive force.

11. Gearbox control device according to one of Claims 6 to 10, **characterized in that** the gearbox control device calculates the current vehicle mass during starting of the motor vehicle from a standstill.

## Revendications

1. Dispositif de commande de transmission pour la commande et/ou la régulation du fonctionnement d'une boîte de vitesse automatique ou automatisée d'un véhicule automobile, dans lequel une stratégie de commutation du dispositif de commande de transmission commande et/ou régule le fonctionnement de la boîte de vitesse sur la base de données d'état du véhicule comme la masse du véhicule et/ou la résistance de conduite et/ou l'inclinaison du véhicule et/ou la vitesse du véhicule et/ou l'accélération du véhicule et/ou le régime du moteur et/ou le couple du moteur et sur la base de données de souhait du conducteur, la stratégie de commutation du dispositif de commande de transmission déterminant, sur la base de données de topographie qui se situent à une distance définie devant une position actuelle du véhicule automobile, un changement de vitesse depuis une vitesse réelle actuelle dans une vitesse de consigne, **caractérisé en ce que** la distance définie devant le véhicule est déterminée en fonction de la vitesse du véhicule.

2. Dispositif de commande de transmission selon la revendication 1, **caractérisé en ce que** la distance définie devant le véhicule automobile est déterminée en fonction de la vitesse du véhicule de telle sorte que la distance définie devant le véhicule automobile soit d'autant plus grande que la vitesse du véhicule est grande.

3. Dispositif de commande de transmission selon la revendication 1 ou 2, **caractérisé en ce que** le dispositif de commande de transmission, en fonction d'une pente qui est déterminée par le dispositif de commande de transmission sur la base des données de topographie situées dans la distance définie devant le véhicule automobile, adapte des incréments de valeurs de compteur d'un observateur de commutation du dispositif de commande de transmission.

4. Dispositif de commande de transmission selon la revendication 3, **caractérisé en ce que** le dispositif de commande de transmission adapte des incréments de valeurs de compteur de l'observateur de commutation de telle sorte que celui-ci, lorsque la pente dans la distance définie devant le véhicule automobile devient plus plate, bloque des rétrogradages en traction.

5. Dispositif de commande de transmission selon la revendication 3 ou 4, **caractérisé en ce que** le dispositif de commande de transmission adapte des incréments de valeurs de compteur de l'observateur de commutation de telle sorte que celui-ci, lorsque la pente déterminée dans la distance définie devant le véhicule automobile devient plus forte, bloque des rétrogradages en traction.

6. Dispositif de commande de transmission pour la commande et/ou la régulation du fonctionnement d'une boîte de vitesse automatique ou automatisée d'un véhicule automobile, dans lequel une stratégie de commutation du dispositif de commande de transmission commande et/ou régule le fonctionnement de la boîte de vitesse sur la base de données d'état du véhicule comme la masse du véhicule et/ou la résistance de conduite et/ou l'inclinaison du véhicule et/ou la vitesse du véhicule et/ou l'accélération du véhicule et/ou le régime du moteur et/ou le couple du moteur et sur la base de données de souhait du conducteur, le dispositif de commande de transmission calculant actuellement en continu, sur la base de données de topographie d'une position actuelle du véhicule automobile, les données d'état de conduite masse du véhicule et/ou résistance de conduite et/ou inclinaison du véhicule, **caractérisé en ce que** le dispositif de commande de transmission, lors de l'enclenchement d'un allumage et/ou à l'arrêt du véhicule automobile lorsque l'allumage est enclenché, calibre un capteur d'inclinaison sur la base des données de topographie de la position actuelle du véhicule automobile, **en ce que** le dispositif de commande de transmission calcule, à partir des données de topographie, l'inclinaison actuelle du véhicule et corrige ainsi la valeur de mesure du capteur d'inclinaison.

7. Dispositif de commande de transmission selon la revendication 6, **caractérisé en ce que** le dispositif de commande de transmission calcule, pendant la conduite du véhicule automobile, à partir des données de topographie, à partir d'une résistance au roulement, d'une résistance à l'air et de la masse du véhicule, la résistance de conduite actuelle.

8. Dispositif de commande de transmission selon la revendication 7, **caractérisé en ce que** le dispositif de commande de transmission calcule à cet effet, à partir des données de topographie, à partir d'une force de traction actuelle, à partir d'une résistance de l'air actuelle et à partir d'une accélération actuelle du véhicule, la résistance au roulement actuelle.

9. Dispositif de commande de transmission selon la revendication 8, **caractérisé en ce que** le dispositif de commande de transmission détermine la force de traction actuelle à partir du couple moteur actuel et l'accélération actuelle du véhicule soit par une technique de mesure soit par calcul à partir de la vitesse actuelle du véhicule.

10. Dispositif de commande de transmission selon l'une quelconque des revendications 6 à 9, **caractérisé en ce que** le dispositif de commande de transmission pendant une conduite du véhicule automobile, à partir des données de topographie, à partir d'une résistance de l'air, à partir d'une résistance au roulement, à partir d'une accélération actuelle du véhicule et/ou d'une force de traction actuelle, calcule la masse actuelle du véhicule.

11. Dispositif de commande de transmission selon l'une quelconque des revendications 6 à 10, **caractérisé en ce que** le dispositif de commande de transmission, pendant un démarrage du véhicule automobile à partir de son état d'arrêt, calcule la masse actuelle du véhicule.
